# EUROPEAN PATENT SPECIFICATION

(11) **EP 1 920 622 B1**
(45) Date of publication and mention of the grant of the patent: **06.04.2016**
(21) Application number: 06779214.3
(22) Date of filing: 25.08.2006
(51) Int. Cl.: H04W 36/14

(54) **PERSONALISED HETEROGENEOUS NETWORK HANDOVER ALERT SCHEME**
HANDOVER-HINWEISSCHEMA FÜR EIN PERSONALISIERTES HETEROGENES NETZWERK
SCHÉMA PERSONNALISÉ D ALERTE DE TRANSFERT DANS UN RÉSEAU HÉTÉROGÈNE

(30) Priority: 31.08.2005 GB 0517715; 31.08.2005 GB 0517711; 31.08.2005 GB 0517712
(43) Date of publication of application: 14.05.2008
(73) Proprietor: BRITISH TELECOMMUNICATIONS public limited company, London EC1A 7AJ (GB)
(72) Inventor: HUGHES, David, Edward, Suffolk IP1 4NG (GB)
(74) Representative: Lidbetter, Timothy Guy Edwin
(86) International application number: PCT/GB2006/003183
(87) International publication number: WO 2007/026133

(56) References cited:
- EP-A2- 1 263 254
- US-A1- 2003 119 454
- US-A1- 2005 130 661

## Description

The present invention relates to a personalised heterogeneous network handover alert scheme and related aspects. In particular, but not exclusively, the invention relates to a scheme for a personalised heterogeneous network handover notification to alert a user to a handover event between different types of networks in a heterogeneous communications system.

One example of a heterogeneous communications system is a wireless communications system comprising a plurality of short-range local area networks and one or more long-range wide-area networks. In such a communications system, examples of heterogeneous handover events include when a handover request message is generated by a mobile communications device of the user and when the handover has been completed.

Mobile communications networks are typically used by devices which have different characteristics to the cordless devices provided for use with fixed line communications networks. Mobile communications devices, for example, cellular telephone handsets, typically use Subscriber Information Module (SIM) cards to provide a unique user identity which associates the communications device with a wireless wide area network, for example, a cellular communications network. The SIM enables the user of the mobile communications device to be identified by the network associated with the user identity for billing purposes, and other identifiers are also provided to recognise the communications device within the network. For example, SIM cards are used in the Global System for Mobile (also known as Group Speciale Mobile) or GSM network, which provides a standard for digital cellular communications within Europe and other territories, which is well known to those of ordinary skill in the art.

A mobile communications device can perform a handover between different GSM wide-area networks when it leaves an area serviced by one network if the mobile communications device has been enabled by the relevant network operators to "roam" in the other network. Calls made in the different network are typically charged at a more expensive rate than those in the user's home network. To alert the user to the presence of the different network, it is known to provide a notification when the user is in the new network coverage area. This notification may be provided by means of a change of background display indicating the network operator/service provider of the new network and/or by sending out a small message service (SMS) text message to the user's mobile handset. All alerts are sent in the same generic format to all mobile communications devices in the new network, regardless of whether any specific individual device can use that network or not.

An example of a wireless local network associated with a fixed calling line identity of a fixed line subscriber which is well known in the art is the wireless network used by DECT, the Digital Enhanced Cordless Telecommunications 2^{nd} generation European cordless standard. This standard digital cordless telephony is based on advanced time division multiplex access (TDMA) technology. DECT was developed by ETSI for domestic cordless telephone service but now extended to other uses as well such as telepoint and data transmission in office environments (wireless LAN). DECT operates in 1.88-1.90GHz band and uses TDMA coding.

Recently, technical advances in short-range wireless communications have enabled other short-range radio frequency transmission networks to be deployed, such as that known as Bluetooth™. Bluetooth™ is a short range radio technology which was devised to simplify data synchronisation between internet devices and computers and for communications among devices using the Internet.

At present, DECT telephones are not compatible with mobile telephone networks and vice versa, which results in users having to subscribe to both a mobile network provider and a wired (fixed) network provider and to have both a mobile telephone number and a home number associated with the fixed network (which may be used by a cordless phone). If a user is using a cordless (e.g. DECT-type) telephone device to make a call, the range of such phones is typically only a few hundred meters at best, and if they were to move out of range of the cordless phone, they must hang up on the call. If they wish to continue the communication using a mobile communications network, the user must re-call the call recipient using a separate mobile telephone device. This is obviously very burdensome and tedious, and results in duplication of telephony equipment and requires use of two subscriber identities/calling line identities (as subscribers are identified in a mobile communications network by their SIM and in a wired communications network by calling line identity).

To obviate and or mitigate the disadvantages of either not providing any alert or simply providing a generic alert to all users of similar mobile communications devices when a handover is performed, in the system and method of the invention, a mobile communications device for use with the invention is capable of transferring calls between homogeneous and/or heterogeneous networks, i.e., networks which have different transmission characteristics, such as range, in which handover alerts are provided which are personalisable by the user of a mobile communications device and/or a subscriber associated with the local area network (LAN) to or from which handover is requested. Whilst such transfers could be performed transparently (particularly if the device is in active use), according to the invention, the user is alerted to the change of networks using alert means which either the user can personalise or which the subscriber has personalised for other users.

Document US2005/0130661 discloses an example of the prior art.

The present invention seeks to provide a communications system and associated aspect which enable a subscriber to personalise the alert provided to other users when the mobile communications devices of said other users enter and/or leave the area covered by the subscriber's LAN.

The handover alert is personalised by the subscriber selectively controlling the form of the announcement sent to other users of the communications system when their devices request a handover to or from the subscriber's LAN.

The present invention also seeks to provide a mobile communications device which is associated with an identity which is capable of routing communications over both a short-range network which interfaces a fixed network (in which a calling line identity may be directly or indirectly associated with the user) as well as over a long-range wireless communications network (in which a subscriber identity and/or device identity is associated with the user).

The term mobile communications device will be used to refer to any mobile communications device capable of using a communications network such as a telephone, personal digital assistant, computer etc.

The term SIM, when used in the context of the invention, refers to any suitable form of user identity, including real and virtual and embedded means of user identification providing the necessary means of enabling a device according to the invention to be recognised in more than one type of network may be used.

The term alert refers to an alert which is displayed on a communications device capable of communicating using a plurality of communications modes, one mode associated with a short-range network (referred to herein as a LAN) the other mode being associated with a long-range network (referred to herein as a WAN).

The alert is provided as a result of a mobile communications device generating a request for handover between two heterogeneous networks.

The alert may be provided to the user either when the request is generated or when the handover has been completed and the communications device operates using a differing communications mode to the mode used prior to generating the handover request.

The invention enables personalisation of alerts associated with one or more events of the handover operation.

Firstly, personalising the event associated with the mobile communications device issuing a request message for the network handover, such as may occur automatically when the quality of service (QoS) in the current network is less than acceptable.

Secondly, personalising the notification message sent to mobile communications device identifying which network the device is in after the handover has occurred.

Thus the term alert may refer to an alert triggered by the request for handover and/or the actual completed handover.

Those of ordinary skill in the art will find apparent that if specific reference is made to one form of alert being triggered by a particular form of network event, any equivalence to the form of alert triggered by the other form of network event exists only where those skilled in the art are able to adapt one form of alert associated with the first type of network event to an alert suitable for the other type of network event.

The invention provides a communication system and a method of providing a network handover alert personalized to a mobile communications device according to the accompanying claims.

Those skilled in the art will appreciate that any appropriate combination of the preferred embodiments and in the accompanying dependent claims can be combined with any appropriate combination of the aspects of the invention set out above and in the accompanying independent claims.

The preferred embodiments of the invention will now be described with reference to the accompanying drawings which are by way of example only, and in which:
Figure 1 shows a communications system comprising a plurality of heterogeneous networks;
Figure 2 shows in more detail, the transfer region between two, heterogeneous networks where a personalised network event notification is generated according to the invention;
Figure 3A shows steps in a method of personalising a network event notification according to an embodiment of the invention;
Figure 3B shows steps in a method of personalising a network event notification according to another embodiment of the invention;
Figure 4 shows an exemplary event listing menu according to an embodiment of the invention;
Figure 5 shows an exemplary handover event menu according to an embodiment of the invention; and
Figure 6 shows an example of how a subscriber to a network can configure differing alerts to differing other devices when said other devices are in said subscriber's home network. The best mode of the invention as currently contemplated by the inventor will now be described with reference to the accompanying drawings. Those skilled in the art will realise that the drawings omit for clarity many features of the invention, and that the drawings show primarily features which are not apparent and/or which are essential to the invention.

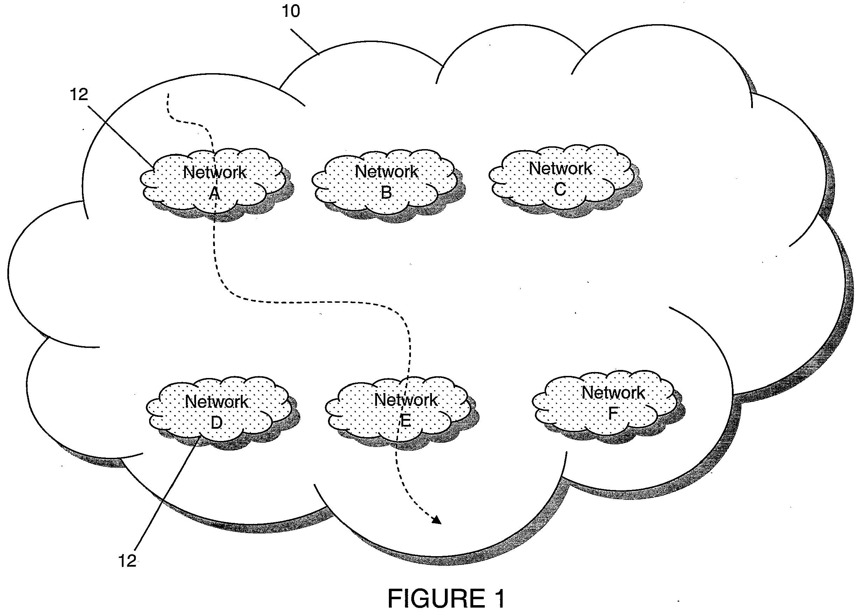

A heterogeneous communications system is shown in Figure 1 of the accompanying drawings, as communications system 1. Communications system 1 comprises a wide area network (WAN) 10 and a plurality of local area networks (LANs) 12. WAN 10 has differing characteristics to LANs 12, and mobile communications devices 20 (not shown in Figure 1) of said heterogeneous communications system operate in differing communications modes depending on whether they are within WAN 10 or in LAN 12. A dual mode mobile communications device according to one embodiment of the invention is capable of performing a handover both on-hook and off-hook (i.e., both when being actively being used for communications and when setting up such communications, or in a state capable of receiving instructions for such communications (i.e., when a dial-tone is generated)). An example of such a device is marketed as BT Fusion™.

Typically, the communications mode within WAN 10 is suitable for long-range communications, e.g. a cellular e.g. (Global System for Mobile) GSM network. The communications mode within the LAN is typically an unlicensed mobile access (UMA) mode of communication, for example, which is capable of providing access to the WAN 10. Alternatively, communications may be session based (for example, supported by the session initiation protocol (SIP)).

WAN 10 covers a sufficiently large geographic region for the network coverage provided by each of the plurality of LANs 12 shown in Figure 1 to be entirely contained within WAN 10. A subscriber (i.e., a user) of the communications system will be provided with a mobile communications device associated with a home LAN, i.e., the user will have a unique subscriber identity associated with their own home LAN. This user identity is also associated with the WAN in the communications system shown in Figure 1.

This association is achieved in one embodiment of the invention by providing dual subscriber identities on the mobile communications device of the user. Alternatively, the user identity may be associated in both the WAN and in the user's home LAN by embedding the user identity for the LAN within the user identity of the WAN (or vice versa).

In one embodiment, a user identity is capable of being associated with both a WAN 10 and one or more LANs 12 (at least the user's own home LAN and preferably, but also in the WAN and in other user's LANs). Whenever the user's device determines that a handover between a WAN and a LAN (or vice versa) is possible, it will generate a handover request event message, and communicate this either to the router associated with the LAN the device is just entering or leaving, or to a base station associated with the WAN. This request will trigger an alert to be provided to the user.

In one embodiment, the alert is configured by the user in accordance with a particular LAN (i.e., either the user's own LAN or with another user's LAN). An alert can be generically personalised by the user (any handover causes a tune to be played), or made specific to a handover request to or from a particular LAN (in which case the mode of alert depends on identifying the LAN and/or the associated subscriber identity for that LAN. Additionally or alternatively, the alert may be configured by the subscriber and provided to other user's of the communication system who visit the subscriber's LAN (i.e., to devices who generate a request to handover to the subscriber's LAN).

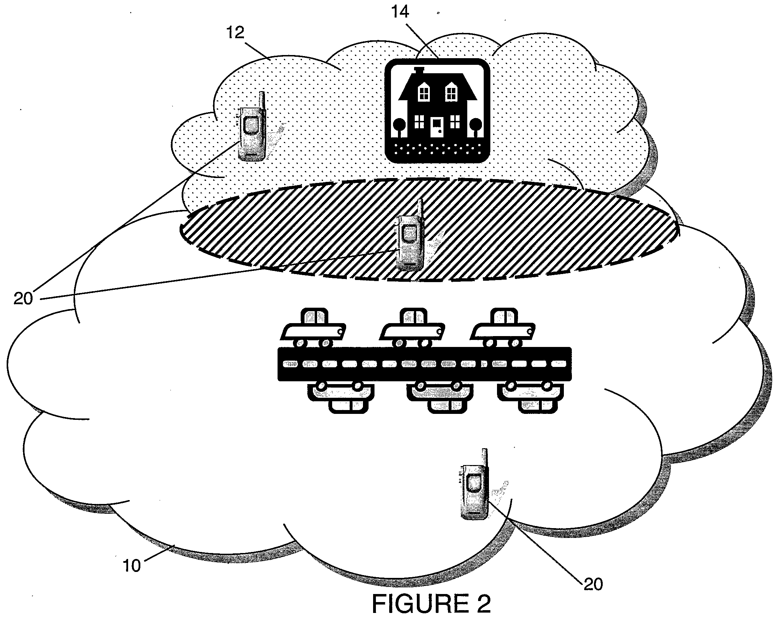

In the exemplary embodiment of the invention shown in Figure 1, dual-mode communications system 1 comprises a wireless WAN 10 and a plurality of wireless LANs 12, of which six LANs At to F are shown. Those in the art will appreciate in practice any number from one to, for example, several hundred thousand LANs 12 may be provided in practical implementations of the invention. The characteristics of each LAN 12 include an area of coverage which is associated with a fixed geographic point (i.e., each wireless LAN is supported by a wireless router or wireless home hub platform, shown as router 14 in Figure 2 of the accompanying drawings). The LAN located within the area of coverage of the WAN 10 and in one embodiment of the invention comprise short-range wireless LANs, such as might be implemented using a UMA mode of communications, e.g. a 802.11 standard (e.g., WiFi, or WiMax), but preferably is a short-range radio network such as that conforming to the Bluetooth™ standard, or any communications protocol which is capable of enabling a mobile communications device operating in such a mode of communications to access WAN 10 when both on-and off- hook.
An exemplary embodiment will now be described in terms of a path a user may take whilst using a dual-mode mobile communications device 20 in the communications system 1 of the invention. This is shown as a dotted curved line shown in Figure 1, in which a user of the mobile communications device 20 moves along a path from a first LAN (A) (for example, their own house), to another LAN (E), and on. Such a path requires the mobile communications device of the user to generate several requests for handover, firstly from LAN A to WAN 10, secondly from WAN 10 to LAN E, from LAN E to WAN 10. to perform This path will be referred to in more detail laterhereinbelow.

As mentioned above, each mobile communications device in a communications system according to the invention has the capability of receiving and transmitting information in at least two modes of communication, one associated with LANs 12, the other with WAN 10. Means for handing over between heterogeneous networks (i.e., between LANs 12 and WAN 10 and vice versa) are also provided on each device. The capability to "perceive" and/or to "roam" in other LANs 12 is optionally provided in some embodiments of the invention. The ability to use a mobile communications device in a plurality of LANs may be a default for a device, and/or require the user to firstly subscribe to a "roaming option" type service. In one embodiment "roaming" is optional only if a subscriber associated with the LAN the mobile communications device is to roam in has configured the LAN accordingly. Such "visiting" mobile communications devices may receive alerts which are a result of handover requests being generated, but unless the mobile communications device is able to use the LAN to which the handover has been requested to, all the user will receive is an alert signifying they are effectively in a specific geographic area, as they will not be able to use the LAN - i.e., although the user is within the area of coverage provided by the LAN network, their device will continue to communicate using the communications mode associated with WAN 10.
A handover network event can be personalised in a number of ways.

Firstly, a user can program their own device to associate the request network handover event with a personalised alert, such as a particular image or video or audio file to be executed. Examples would be to associate the home network with an image of a family, to play an announcement such as "Welcome Home", or to vibrate. This event message could be associated with all heterogeneous network handovers.

Secondly, in an other embodiment of the invention, the user could associate a network handover request message associated with a particular network identity (for example, if they associated the handover to the home network of another user whose number details were stored in association with that network's identity) to personalise the alert in a different manner (e.g., to play a sound saying "You're at Granny's"), or to display an image of "Granny" on the mobile communications device display.

The third manner of personalising the heterogeneous network handover is for the user to generate a personalised message to alert other users of similar devices, to the fact that they have entered his or her home network, (i.e., to a network for which the user has a "subscriber status") e.g., to play a sound indicating "You're at Bob & Carol's", and to send automatically a picture say of the family pet to the screen of the visitor's mobile communications device, when the other user's device generates a request to handover to that home network of the user.

In Figure 2 of the accompanying drawings, WAN 10 is shown below a LAN 12. A LAN 12 generated using a wireless router 14 provided in a subscriber's home or other premises, this subscriber associated LAN is referred to as a "home network" or equivalently as a "home LAN" herein. The term "home network" is used to refer to all LANs associated with subscribers in the sense they are associated with a geographic area of coverage associated with the subscriber's home (or equivalently with work premises, or with a shop premises, or restaurant, or hospital, or other premises etc). Outside the home network 12 area of coverage, WAN 10 provides one or more communications services to mobile communications device 20, whereas inside the subscriber's home LAN, the LAN provides one or more communications services. In some embodiments of the invention, mobile communications device 20 is also able to receive one or more communications services within the LANs of other subscribers to the communications system.

On the lower side as shown in Figure 2, at a first position, mobile communications device 20 is wholly within the WAN 10. On the upper half of Figure 2, at a third position, mobile communications device 20 is shown wholly within the area covered by LAN 12. In an intermediate position, such as is indicated by the hashed boundary region 16 shown in Figure 2, mobile communications device 20 is in a state of handover between the two networks.

As mentioned hereinabove, a heterogeneous network transfer event has two stages. Firstly, a request is issued by the mobile communications device to request handover. When this request is generated the mobile communications device is still communicating using a mode of communication associated with the pre-handover network. Secondly, after the handover has been completed, a notification is issued to indicate the user is in the second network. After handover, the mobile communications device uses a different mode of communication to the first, the different mode of communication being used within the second network.

In one embodiment of the invention, the user is able to personalise an alert which is associated with the request issued by the device for handover to a different network. In an alternative embodiment of the invention, the user is able to personalise an alert indication identifying when the mobile communications device is within the area of cover of the new network. This alert can indicate that either simply that the LAN exists (i.e., it may comprise an advertisement which has been configured either by the user of the mobile communications device, or by the subscriber to the other LAN), or that handover has been successful, or that one or more services and/or characteristics of the LAN are available.

A number of alert modes are possible, including individual or combinations of alerts, for example, audio, visual, video, tangible (e.g., vibration) etc. The alerts are activated by associating data with the relevant network event using an appropriate application. In one embodiment of the invention, an alert is dependent on the direction of the handover (i.e., depend on whether the user is arriving into the LAN or leaving it). An alert is in one embodiment configured by a user of the mobile communications device using the mobile communications device. Alternatively, an alert may be configured remotely and the configuration settings transferred to the mobile communications device when within the subscriber or other user's LAN, by means of data signals such as support file transfer and/or messaging services, or using appropriate means such as are well-known to those skilled in the art.

In a preferred embodiment of the invention, the mobile communications device 20 is provided with a user identity (e.g. a SIM code) associated with a LAN mode of communications, e.g., with a short-range radio network such as Bluetooth™, which is capable of being associated directly or indirectly with a user identity for use in a WAN (e.g., within a GSM network). The term user identity as referred to herein refers to a single device/user operating a device, regardless of how the identity in practice is recognised within each network.

For example, referring back now to Figure 1, as the mobile communications device moves along the dotted line shown, user identity associated the LAN "A" may differ from that of WAN 10, but nonetheless the two are associated together, enabling a unique user identity to be provided within both LAN "A" (or any other LAN 12 of the communications system) and WAN 10.

According to the invention, a handover event generates an alert either indicating when the communications mode of the mobile communications device has changed and/or when the mobile communications device has requested that the communications mode change. For example, along the path shown in Figure 1, although the route taken is entirely within the network coverage of WAN 10, as mobile communications device 20 is capable of performing a handover between WAN 10 and LAN A, when mobile communications device 20 is within the area of cover provided by LAN A, the mobile communications device will operate using a different mode of communications to that used when it is within WAN 10.

Consider a user A whose "home network" is LAN A. In one embodiment of the invention, whenever user A is outside the area of cover provided by network A, the GSM network is the only network which can used by their mobile communications device (for example, such as is the case if the "LAN roaming option" has not been subscribed to by the user). This means that when the mobile communications device is in the area covered by other short range network E, the user A of the mobile communications device will continue to use the GSM network even when they are within range of network E.

In one embodiment, LAN E shown in Figure 1 is configured to announce itself to "visitors" (i.e., other users of the communications system, associated with other home LANs), when the mobile communications devices of the "visitors" enters the area covered by LAN E. In one embodiment, a user associated with LAN E (i.e., the subscriber associated with LAN E) is provided with an alert when other mobile devices have requested (or completed) a handover to LAN E. This effectively enables a user to monitor visitors to the premises associated with their home LAN.

In another embodiment, a user (i.e., a "visitor") is alerted when their mobile communications device is in the coverage area of LAN E as a result of their mobile communications device requesting to handover to E, regardless of whether such a request is successful or not. When generated solely as a result of a request being issued for handover by their mobile communications device, the alert provided to the user is an indication of the extent of LAN E.

It is possible for the user of a mobile communications device in one embodiment of the invention, to configure their mobile communications device to generate alerts which are specific to one or more LAN identifiers, i.e., to general a specific alert indicating LAN E, and/or to provide a default alert for all other (non-home) LANs. Alternatively, in another embodiment of the invention, such an alert is configured by the user for whom E is the home network. Again, this alert may be specific to user A and their device or be generic to all visitors.

By providing an alert to the user, which either the user could configure or the subscriber responsible for network E could configure, the user would know that network E exists. To give some examples of such a personalised alert, this could be very helpful to children (e.g. "Welcome to Granny's") in which case the "Granny" could configure a personalise announcement to be sent to the mobile communications devices of the children. However, a more generic announcement could be given instead to other mobile communications devices, e.g. "Mrs. SoAndSo". The ability to personalise and distinguish visiting devices means that generic announcements which might be useful for businesses, e.g. "X Restaurant" etc., might customise their announcements for repeat customers etc. Alternatively, a privacy mode could be adopted as a default to "visiting" devices.

In an embodiment where user A is able to use their mobile communications device in LAN E, this is because the user has automatically rights to use any LAN in the communications system 1. In another embodiment, user A may subscribe to a roaming option which requires consent from the subscriber for each LAN within which they wish to have roaming rights.

In yet another an alternative embodiment of the invention, user E, who has a SIM associated with network E, has subscribed to a service which enables network E to allow other SIMs associated with other LANs to use network E if they are within the area covered by network E. This would mean for example, that if a user were to start a call at home network A, and continue the call as they crossed the road to their neighbours house (network E), the mobile telephony device used to make the call would handover twice, firstly heterogeneously between network A and GSM network 10, and secondly heterogeneously between GSM network 10 and network E. Thus, "Granny" may configure her home network to enable other devices (e.g. in the family) to use her home-network when within it. The availability of the "Granny" home network would be consistent with the announcement that the visiting mobile communications device is within the network coverage of the device.

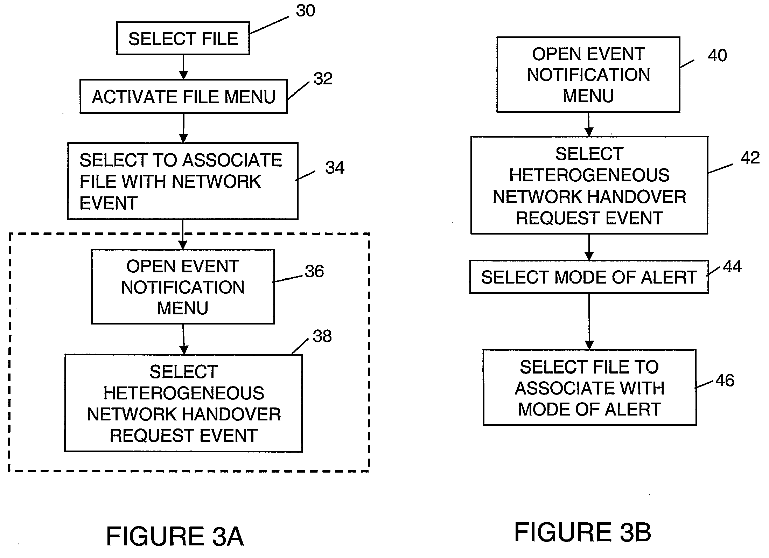

To associate a network event with a particular alert mode, a user interface is provided which configures the mobile communications device to appropriately associate a type of handover event with another action such as playing a sound file/displaying an image etc. The user interface can be provided on the mobile communications device or another platform which is capable of interfacing with the wireless router of the subscriber's LAN to remotely configure the subscriber's or other user's mobile communications devices who are seeking to handover to the LAN. The user-interface can either take a form where a user selects an option (or alternatively a file) which they associate with a particular handover event (see Figure 3A) or a menu is provided which enables the user to associate an event with a particular file (see Figure 3B).

According to one embodiment of the invention, the user associates the network handover request event and/or personalise network identification alerts with an appropriate media file. An appropriate file is capable of being executed on the user's mobile communications device. Examples include image files, movie files, audios files (e.g., sound-clips), and files associated with other forms of alert such as activation of light indicators and/or a vibration alert. Examples of different types of files include files of the form .jpg, .mp3, .wav, .wmp, etc. These media files may be generic or specifically provided for the device network identification and heterogeneous handover alert purpose, and may be generated by the user storing files they have created themselves (e.g., a voice recording), or which have been downloaded from a server either on a pay-per-go or via a subscription service etc. In one embodiment of the invention, the audible alert comprises any suitable audible media such as can be played on the user's mobile communications device, which may vary from a simple tone, or ring-tune to a polyphonic tune. In an alternative embodiment of the invention, the user is able to upload to the mobile communications device a configuration for the heterogeneous handover event notification and/or any subsequent indications of which network the mobile communications device is in from a device with greater storage and/or processing capabilities, such as a home computer.

Referring now to Figure 3A in more detail, this shows schematically a configuration scheme for personalising a heterogeneous handover alert in which a user selects a file (step 30), activates a file menu for that file (step 32), and then selects to associate the file with a network event (step 34). If the user has just a default alert for all network handover events, the process of personalising their network handover event may terminate at that point. If the user has a more sophisticated system, for example, they could access optional menu options, such as might be the case if they wanted to distinguish between different short-wave networks, and/or whether they are entering or leaving a short-wave network etc, then other menu options may be presented or opened in a hierarchical format. The optional steps of opening an event notification menu (36) and selecting a specific heterogeneous network handover event (step 38) are shown within the dotted boundary shown in Figure 3A. The ability to associate a file with a network event may be provided whenever a file is selected which is capable of being associated with an alert mode.

Figure 3B shows in another embodiment the invention (which may be provided in addition or instead of the system shown in Figure 3A), a configuration scheme for personalising a heterogeneous handover alert in which a user first opens an event notification menu (step 40), selects an event (42), selects mode of alert (44), and then selects a file to associate with a mode of alert (46).

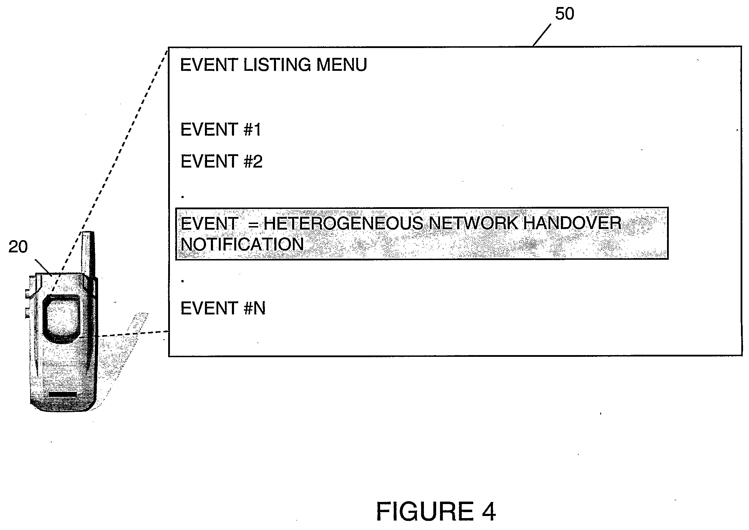

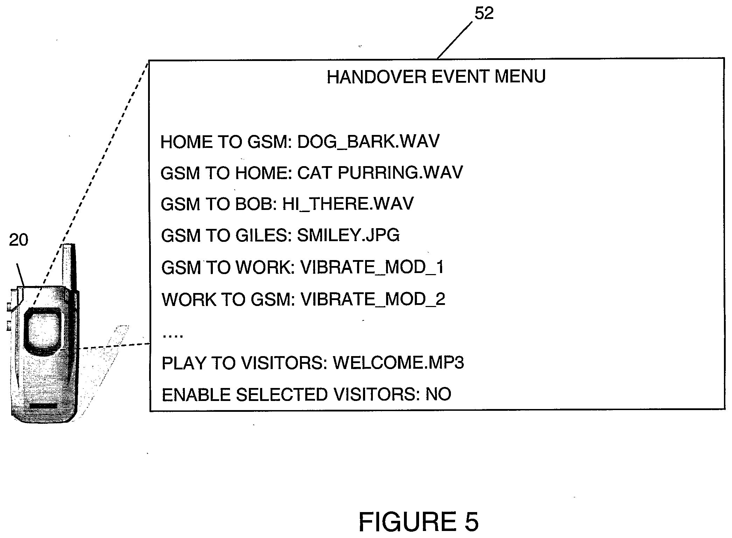

Figure 4 of the accompanying drawings shows an embodiment of the invention in which a user is able to cause an event listing menu 50 screen to be displayed on mobile communications device 20. The user then employs the mobile communications device to associate a particular alert with a heterogeneous handover request event. As shown in Figure 4, the event heterogeneous handover network event has been selected. The user may then select one or more different media files to be associated with the event of the device sending a request to perform a heterogeneous handover. As mentioned above, in one embodiment, an alert is generated only when handover is successful or alternatively, a second alert is provided to indicate successful handover. In one embodiment, this alert indicates the identity of the new network once the handover process has completed.
The user may also provide "visitors" to their network with individual and/or generic announcements when they are in their network. Examples of such menu options are shown in Figure 5. In Figure 5, handover event screen 52 as displayed enables a user to select which one of a plurality of heterogeneous handovers they want to associated with a particular alert. In this case, the user has associated different .wav audio files to be played when they enter and leave home, and when they enter Bob's home network. When they visit Gile's home network a JPEG image file is displayed on their device. When they use their phone at work, the alert to the work network coverage is provided by a more discrete vibrate alert. They have a single default message to all visitors who all are able to see their home network "Welcome". They have not enabled any visitors to use their home network.

In one embodiment, an alert is provided when a mobile communications call is actively taking place and has a form which enables it to be noticeable by the user of the mobile communications device involved in the handover. For example, any audio sound may be represented as a tone etc or any other form which is played in such a way that it is not transmitted along with other data when the mobile communications device is being used to place an active call to the far end. This means that only the user of the mobile communications device will hear any audible alert as to which network they are in, and not the user of any device at the far end. Such an option may be configurable by the user, and is useful, for example, if the user does not want other persons to be able to associate the user with a particular location when they communicate. In one embodiment, the user configures different on-hook and off-hook alerts, and these different alerts in one embodiment distinguish between alerts provided to visitors and to the subscriber's mobile communications device.

Those skilled in the art will appreciate that to enable visitors to use a subscriber's home network - e.g. if someone is visiting their "Granny" etc, requires the subscriber to be capable of providing an appropriate indication to the router handing handover requests for that LAN that one or more services available in the home network to users already associated with that network should also be available to visiting devices. In one embodiment of the invention, such enablement occurs by default - any device capable of using a wireless broadband connection is capable of using any subscribers wireless broadband local area network, so that when a handover request is generated it follows by default that handover will follow unless the network overrides this. However, in other embodiments as mentioned above, successful handover is not assured - i.e., the device may request to handover, but in fact remains communicating using the wide area network mode of communication. Thus in some embodiments of the invention, the alert does not mean that the device is now able to use the local area network, such that the local area network exists and the device is now located within it.

Such embodiments may provide a selective service, and if so, the router associated with the local area network must be able to associate visitor's user identity as able to use said local area network (and/or to be able to use one or more services available over said local wireless network). This configuration may be performed in any appropriate manner already apparent to those skilled in the art. For example, the router may be configured to identity the user's identity directly by association with their mobile calling line identity equivalent, i.e., their SIM, or other identity uniquely associated with a user's device. In which case, the subscriber is able to associate services to be made available when configuring the alert they want to sent to the visitor when they hand over to the user's network (or when they request a handover - which may or may not be granted). Consider an exemplary embodiment where one or more SIMs is used by a mobile communications device to indicate the subscriber/ user identity for that device. In this case, when a router recognises a visiting LAN SIM, the event could cause the router to push out a "Welcome" type of announcement to the user, and if the LAN SIM was in a particular category, the user of that "visiting" LAN SIM could then use the LAN and not the GSM network.

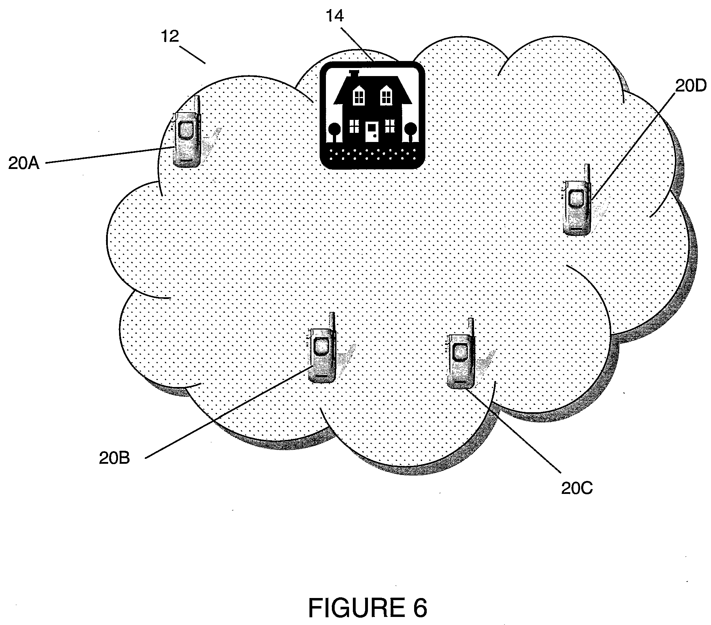

Figure 6 shows schematically an embodiment of a communications system 1 in which a subscriber configures the alert provided to other users who are visiting their network. Suppose user of mobile communications device 20a has as their home network local area network 12. User of mobile communications device 20a configures alerts to be sent to inform visiting mobile communications devices 20b 20c and 20d using an appropriate computer application. In one embodiment, this application is able to operate on a mobile communications device to provide the user with means for entering or selecting the communications network identities of the users of devices 20a,b,and c (e.g., their telephone numbers or icons or other displayed identities) and for associating each identity with particular alert modes and/or files which are to be either provided to the visiting user's mobile communications devices via the communications system, or which are to be activated on the visiting user's mobile communications device if previously provided or installed. The configuration application is provided to a platform which is capable of communicating the user's selection to a remote server which receives notification from visiting mobile communications devices of any request to handover from another network to the home network, and which performs a look-up operation to determine if the identity of the user associated with the device which has generated the request to hand-over message has been associated with a specific alert. If so, then the remote platform causes the necessary data to be provided to the visiting device to enable the device to generate an alert as selected. Alerts can also be selected according to a group of identities. In this way, a user can configure their home network to play a particular announcement to "friends" which differs from those provided to "family", and to provide a different announcement to an individual from that used for general visitors etc. A default announcement can be selected. The alert may over-ride user preferences for personalised alerts on their mobile communications devices unless the user has selected either not to override visiting device personalised alerts (which means it will only override generic alert modes of handover notification or alerts for which no "don't override" has been configured). Thus the alert provided to mobile communications device 20B may comprise a particular greeting, that to device 20C may comprise another greeting, and the user may have configured their system so that not alert at all is provided to device 20D. In this way, the user of device 20D is either not alerted to home network 12 by the subscriber of home network 12. Depending on how the communications system has been configured, this means that either device 20D may generate their own alert (for example if the user of device 20D has configured that device to recognise when they are within the local area network associated with user identity of 20A), or they may receive a network-wide default alert, or no alert at all.

In another embodiment of the invention, the alert configuration application runs on a different platform. Alternatively, this association could be done using another device, e.g. a personal computer, again user identities are either entered by the home network user or selected for example, using contact information already available on the personal computer (such as might, for example, be provided in Outlook™ etc..). These embodiments enable a user to associate one or more particular user identities each with a form of alert mode, and a particular media form for the alert, in the manner mentioned herein above so that personalised alerts can be provided to individual and groups of visitors of another user's home network. Those skilled in the art will appreciate that as the mobile communications device remains operational using the WAN communications mode even when handover to another user's LAN is not successful, information can be communicated to the mobile communications device which cause a personalised alert to be generated.

Those skilled in the art will recognise that several equivalents to the features described in each embodiment exist, and that it is possible to incorporate features of one embodiment into other embodiments (for example, the features described in the context of a user may also apply when that user is the subscriber of a home LAN and vice versa etc). Accordingly, the spirit and scope of the invention is not to be confined to the specific elements recited in the description but instead is to be determined by the scope of the claims, when construed in the context of the description, bearing in mind the common general knowledge of those skilled in the art.

The text of the abstract below is hereby incorporated into the specification:
A communications system comprising a plurality of local area networks (LAN) and a wide area network (WAN). The mode of communication used in said LANs differs from the mode of communication within said WAN. One of the LANs comprises a home LAN which is associated with a user identity (e.g. a subscriber for that LAN in the communications system). The user identity is directly or indirectly also associated with a wide area network. The invention provides a method of configuring an alert to devices operated by other user identities which have performed a handover operation either into or from said home network of the subscriber. The alert is configured by said subscriber (e.g., by a user identity of the home network) either as a default to all "visitors" or in dependence on one or more of the other user identities. In this way, each user identity visiting the subscriber's home network receives an alert which is capable of being specific to the visitor. The subscriber may select the form of alert to be provided to another user based individually on the other user's identity in the communications network or for a group of users. The method thus enables alerts to distinguish different users or groups of users. The form of alert provided may over-ride any personal preferences configured for the mobile communications devices of the visiting users.

## Claims

1. A communications system comprising:
a plurality of wireless communications local area networks; and
a wireless communications wide area network,
means to send and receive communications to mobile communications devices capable of operating in a first mode within one of a plurality of wireless communications local area networks and capable of operating in a second mode within said wireless communications wide area network, and capable of performing a network handover between at least one of said wireless communications local area networks and said wireless communications wide area network,
the communications system comprising handover means to process a handover request received from such a mobile communications device when said mobile communications device seeks to perform a said network handover in either direction between said wireless communications wide area network and said at least one of said wireless communications local area networks;
the handover means comprising means to identify a wireless communications local area network associated with the said handover request;
means to determine an identity for a user of the mobile communications device making the handover request;
means to communicate said identity to a router for said wireless communications local area network associated with said handover request; wherein the communications system is arranged to enable a first subscriber associated with said wireless communications local area network to store, at a location accessible to said router, for each of a plurality of mobile communications devices, a subscriber-personalised network handover alert to be announced on the mobile communications device associated with said user identity on entering and/or leaving an area covered by said wireless local area network, wherein
the form of said subscriber-personalised network handover alert is selectively determined by said first subscriber, and
means to determine, when a handover is requested, whether said subscriber-personalized network handover alert has been configured on said router for communication to said mobile communications device and if so, to communicate said alert to said mobile communications device

2. A communications system as claimed in claim 1, wherein
a said mobile communications device is associated with a user identity and is capable of operating in two modes of communication, one mode being associated with a said wireless communications local area network, the other mode being associated with a said wireless communications wide area network, the mobile communications device comprising:
means for determining the presence of another wireless communications network in which said mobile communications device operates using a different one of said two modes of communication from a current one of said two modes of operation of the mobile communications device in a said wireless communications network in said communications system;
means for determining if one or more criteria for requesting a said network handover to a said other wireless communications network are met;
means for requesting a network handover to said other wireless communications network, said requested network handover being for performing a heterogeneous network handover either to or from said wireless communications local area network associated with said subscriber, said subscriber having a subscriber-identity associated with a user other than a user having the user identity associated with the said mobile communications device; and
means for generating said subscriber-personalised network handover alert on said mobile communications device in association with a heterogeneous network handover event of said requested network handover of said mobile communications device.

3. A method of providing a network handover alert personalized to a mobile communications device (20) in a communications system (1),, the communications system comprising a plurality of wireless communications local area networks (12) and a wireless communications wide area network (10), said mobile communications device (20) being associated with a respective user identity and being capable of operating in two modes of communication, a first mode being associated with a wireless communications local area network (12) of said communications system (1), and a second mode being associated with the wireless communications wide area network (10) of said communications system, and also being capable of performing a network handover between at least one of said wireless communications local area networks and said wireless communications wide area network, the method comprising
processing network handover requests received from a mobile communications device when said mobile communications device seeks to perform a network handover between said wireless communications wide area network and one of a plurality of the wireless communications local area networks by determining, for a mobile communications device operating in one of the networks, the presence of another wireless communications network within which said mobile communications device is operable using one of the modes of communication different from a current mode of operation of said mobile communications device in said communications system;
determining if one or more criteria for requesting a network handover to said other wireless communications network are met;
generating a network handover request for performing a network handover to said other wireless communications network when said one or more criteria for requesting a network handover to said other wireless communications network are met, said requested network handover being either to or from the said wireless local area network;
storing, at a location accessible to a router associated with the wireless communications local area networks associated with a first subscriber associated with a first user identity, a personalised network handover alert for a specific user identity or group of user identities, the form of the alert being generated by the first subscriber; ;
identifying one of the wireless communications local area networks associated with the said handover request as being said wireless communications local area network;
communicating the user identity associated with the user device to a router associated with the said local area network;
determining if said subscriber-personalised network handover alert associated with the user identity has been configured on said router by said first subscriber, and if so, to communicate said alert to said mobile communications device, and
generating said subscriber-personalised network handover alert on said mobile communications device in association with the network handover event.

4. A method as claimed in claim 3 , wherein
said network handover event comprises generating said network handover request.

5. A method as claimed in claim 3
, wherein
said network handover event comprises completing a network handover to or from said wireless communications local area network of said subscriber.

6. A method as claimed in any one of claims 3, 4, or 5, further comprising the steps of:
receiving said network handover request at a wireless router supporting said wireless communications local area network of said subscriber, and
processing said network handover request to determine said user identity associated with the mobile communications device which generated said network handover request.

7. A method as claimed in any one of claims 3, 4, 5, or 6, wherein said mobile communications device further comprises means to request a network handover between heterogeneous wireless communications networks (10, 12) of said communications system (1) both on-hook and off-hook, wherein said method further comprises a said off-hook mobile communications device requesting a said network handover.

8. A method as claimed in any one of claims 3, 4, 5, 6, or 7, wherein the form of the subscriber-personalised network handover alert is selectively controlled by the subscriber to a subscriber-personalised form and is provided in the same subscriber-personalised form to any mobile communications device which is within the area serviced by said wireless local area network of the subscriber.

9. A method as claimed in any one of claims 3, 4, 5, 6, or 7, wherein the form of the subscriber-personalised network handover alert is determined by the subscriber for a specific user identity or group of user identitites.

10. A method as claimed in any one of claims 3, 4, 5, 6, 7, 8 or 9, wherein the form of the subscriber-personalised network handover alert is indicative that the subscriber has enabled said mobile communications device of said other user to access one or more services of the subscriber's wireless local area network.

11. A method as claimed in any one of claims 3, 4, 5, 6, 7, 8, 9, or 10, wherein the subscriber-personalised network handover alert comprises an indication of the subscriber identity of the first subscriber to or from which said mobile communications device has requested handover.

12. A method as claimed in any one of claims 3 to 11, wherein
said subscriber-personalised network handover comprises a media file, wherein
when said mobile communications device generates a said request for a network handover from or to said wireless communications local area network associated with said subscriber identity, said media file is executed on said mobile communications device.

13. A method as claimed in claim 12, wherein
said executed media file comprises at least one form of the following media:
one or more images to be displayed on the mobile communications device;
one or more audio files to be played on the mobile communications device;
one or more video files to be played on the mobile communications device; and/or
a physical response in the mobile communications device.

14. A method as claimed in any one of claims 3 to 13, wherein
a differing subscriber-personalised network handover alert is provided to said mobile communications device when said mobile communications device performs a handover to said wireless communications local area network from said wireless communications wide area network, than when said mobile communications device performs a handover from said wireless communications local area network to said wireless communications wide area network.

## Patentansprüche

1. Kommunikationssystem, das umfasst:
eine Vielzahl von drahtlosen lokalen Kommunikations-Netzwerken und
ein drahtloses Weitverkehrs-Kommunikations-Netzwerk,
eine Einrichtung zum Senden von Kommunikation an mobile Kommunikationsvorrichtungen und zum Empfangen von Kommunikation von mobilen Kommunikationsvorrichtungen, die befähigt ist, in einem drahtlosen lokalen Kommunikations-Netzwerk einer Vielzahl von drahtlosen lokalen Kommunikations-Netzwerken in einem ersten Modus zu arbeiten, und die befähigt ist, in dem drahtlosen Weitverkehrs-Kommunikations-Netzwerk in einem zweiten Modus zu arbeiten, und die befähigt ist, ein Netzwerk-Handover zwischen mindestens einem der drahtlosen lokalen Kommunikations-Netzwerke und dem drahtlosen Weitverkehrs-Kommunikations-Netzwerk durchzuführen,
wobei das Kommunikationssystem eine Handover-Einrichtung zur Verarbeitung einer Handover-Anforderung aufweist, die von einer solchen mobilen Kommunikationsvorrichtung empfangen wird, wenn die mobile Kommunikationsvorrichtung die Durchführung eines Netzwerk-Handovers nach beiden Richtungen zwischen dem drahtlosen Weitverkehrs-Kommunikations-Netzwerk und dem mindestens einen der drahtlosen lokalen Kommunikations-Netzwerke verlangt,
wobei die Handover-Einrichtung umfasst:
eine Einrichtung zum Identifizieren eines drahtlosen lokalen Kommunikations-Netzwerks, das mit der Handover-Anforderung verknüpft ist,
eine Einrichtung zur Festlegung einer Identität für einen User der mobilen Kommunikationsvorrichtung, welche die Handover-Anforderung erzeugt,
eine Einrichtung zur Übermittlung der Identität an einen Router für das drahtlose lokale Kommunikations-Netzwerk, das mit der Handover-Anforderung verknüpft ist,
wobei das Kommunikationssystem so ausgebildet ist, dass es einem ersten Teilnehmer, der mit dem drahtlosen lokalen Kommunikations-Netzwerk in Verbindung steht, ermöglicht wird, für jede einer Vielzahl von mobilen Kommunikationsvorrichtungen an einem für den Router zugänglichen Ort einen für den Teilnehmer individualisierten Hinweis auf ein Netzwerk-Handover zu speichern, der beim Eintreten in einen durch das drahtlose lokale Netzwerk abgedeckten Bereich und/oder beim Verlassen eines durch das drahtlose lokale Netzwerk abgedeckten Bereichs bei der mobilen Kommunikationsvorrichtung, der die User-Identität zugeordnet ist, zu melden ist, wobei die Art des für den Teilnehmer individualisierten Hinweises auf ein Netzwerk-Handover durch den ersten Teilnehmer selektiv bestimmt wird,
und
eine Einrichtung zum Ermitteln, wenn ein Handover angefordert wird, ob der für den Teilnehmer individualisierte Hinweis auf ein Netzwerk-Handover bei dem Router zur Kommunikation mit der mobilen Kommunikationsvorrichtung konfiguriert wurde, und, falls dies zutrifft, zum Übermitteln des Hinweises an die mobile Kommunikationsvorrichtung.

2. Kommunikationssystem wie in Anspruch 1 beansprucht, bei dem
eine mobile Kommunikationsvorrichtung mit einer User-Identität verknüpft und befähigt ist, in zwei Kommunikations-Modi
zu arbeiten, wobei ein Modus mit einem drahtlosen lokalen Kommunikations-Netzwerk verknüpft ist und der andere Modus mit dem drahtlosen Weitverkehrs-Kommunikations-Netzwerk verknüpft ist,
wobei die mobile Kommunikationsvorrichtung umfasst:
eine Einrichtung zum Ermitteln des Vorliegens eines anderen drahtlosen Kommunikations-Netzwerks, in dem die mobile Kommunikationsvorrichtung unter Verwendung eines gegenüber einem momentanen Betriebs-Modus der beiden Kommunikations-Modi anderen Kommunikations-Modus der mobilen Kommunikationsvorrichtung in einem drahtlosen Kommunikations-Netzwerk in dem Kommunikationssystem in Betrieb ist,
eine Einrichtung zum Ermitteln, ob ein Kriterium oder mehrere Kriterien für die Anforderung eines Netzwerk-Handovers zu einem anderen drahtlosen Kommunikations-Netzwerk erfüllt ist bzw. sind,
eine Einrichtung zum Anfordern eines Netzwerk-Handovers zu dem anderen drahtlosen Kommunikations-Netzwerk, wobei das angeforderte Netzwerk-Handover zur Durchführung eines heterogenen Netzwerk-Handovers entweder zu oder von dem drahtlosen lokalen Kommunikations-Netzwerk dient, das mit dem Teilnehmer verbunden ist, wobei der Teilnehmer eine mit einem User verknüpfte Teilnehmer-Identität aufweist, der ein anderer User ist als ein User, der die mit der mobilen Kommunikationsvorrichtung verknüpfte User-Identität besitzt,
und
eine Einrichtung zum Erzeugen des für den Teilnehmer individualisierten Hinweises auf ein Netzwerk-Handover bei der mobilen Kommunikationsvorrichtung in Verbindung mit einem Vorgang des heterogenen Netzwerk-Handovers des angeforderten Netzwerk-Handovers der mobilen Kommunikationsvorrichtung.

3. Verfahren zur Bereitstellung eines für eine mobile Kommunikationsvorrichtung (20) in einem Kommunikationssystem (1) individualisierten Hinweises auf ein Netzwerk-Handover, wobei das Kommunikationssystem eine Vielzahl von drahtlosen lokalen Kommunikations-Netzwerken (12) und ein drahtloses Weitverkehrs-Kommunikations-Netzwerk (10) umfasst, wobei die mobile Kommunikationsvorrichtung (20) mit einer entsprechenden User-Identität verknüpft und befähigt ist, in zwei Kommunikations-Modi zu arbeiten, wobei ein erster Modus mit einem drahtlosen lokalen Kommunikations-Netzwerk (12) des Kommunikationssystems (1) verknüpft ist und ein zweiter Modus mit dem drahtlosen Weitverkehrs-Kommunikations-Netzwerk (10) des Kommunikationssystems verknüpft ist, und die ferner befähigt ist, ein Netzwerk-Handover zwischen mindestens einem der drahtlosen lokalen Kommunikations-Netzwerke und dem drahtlosen Weitverkehrs-Kommunikations-Netzwerk durchzuführen,
wobei das Verfahren umfasst:
Verarbeiten von Netzwerk-Handover-Anforderungen, die von einer mobilen Kommunikationsvorrichtung empfangen werden, wenn die mobile Kommunikationsvorrichtung die Durchführung eines Netzwerk-Handovers zwischen dem drahtlosen Weitverkehrs-Kommunikations-Netzwerk und einem drahtlosen lokalen Kommunikations-Netzwerk einer Vielzahl der drahtlosen lokalen Kommunikations-Netzwerke verlangt, indem für eine mobile Kommunikationsvorrichtung, die in einem der Netzwerke in Betrieb ist, das Vorliegen eines anderen drahtlosen Kommunikations-Netzwerks ermittelt wird, in dem die mobile Kommunikationsvorrichtung unter Verwendung von einem der Kommunikations-Modi betreibbar ist, der von einem momentanen Betriebs-Modus der mobilen Kommunikationsvorrichtung in dem Kommunikationssystem verschieden ist,
Ermitteln, ob ein Kriterium oder mehrerer Kriterien für die Anforderung eines Netzwerk-Handovers zu dem anderen drahtlosen Kommunikations-Netzwerk erfüllt ist bzw. sind,
Erzeugen einer Netzwerk-Handover-Anforderung zur Durchführung eines Netzwerk-Handovers zu dem anderen drahtlosen Kommunikations-Netzwerk, wenn das eine Kriterium oder die mehreren Kriterien für die Anforderung eines Netzwerk-Handovers zu dem anderen drahtlosen Kommunikations-Netzwerk erfüllt ist bzw. sind, wobei das angeforderte Netzwerk-Handover ein Handover entweder zu oder von dem drahtlosen lokalen Kommunikations-Netzwerk ist,
an einem Ort, der für einen Router zugänglich ist, der mit den drahtlosen lokalen Kommunikations-Netzwerken in Verbindung steht und mit einem ersten Teilnehmer verknüpft ist, dem eine erste User-Identität zugeordnet ist, Speichern eines individualisierten Hinweises auf ein Netzwerk-Handover für eine bestimmte User-Identität oder Gruppe von User-Identitäten, wobei die Art des Hinweises durch den ersten Teilnehmer erzeugt wird,
Identifizieren von einem der drahtlosen lokalen Kommunikations-Netzwerke, das mit der Handover-Anforderung verknüpft ist, als das drahtlose lokale Kommunikations-Netzwerk,
Übermitteln der mit der User-Vorrichtung verbundenen User-Identität an einen mit dem lokalen Netzwerk in Verbindung stehenden Router,
Ermitteln, ob der für den Teilnehmer individualisierte Hinweis auf ein Netzwerk-Handover, der mit der User-Identität verknüpft ist, bei dem Router durch den ersten Teilnehmer konfiguriert wurde, und, falls dies zutrifft, Übermitteln des Hinweises an die mobile Kommunikationsvorrichtung
und
Erzeugen des für den Teilnehmer individualisierten Hinweises auf ein Netzwerk-Handover bei der mobilen Kommunikationsvorrichtung in Verbindung mit dem Vorgang des Netzwerk-Handovers.

4. Verfahren wie in Anspruch 3 beansprucht, bei dem der Vorgang des Netzwerk-Handovers das Erzeugen der Netzwerk-Handover-Anforderung umfasst.

5. Verfahren wie in Anspruch 3 beansprucht, bei dem der Vorgang des Netzwerk-Handovers den Abschluss eines Netzwerk-Handovers zu oder von dem drahtlosen lokalen Kommunikations-Netzwerk des Teilnehmers umfasst.

6. Verfahren wie in einem der Ansprüche 3, 4 oder 5 beansprucht, das ferner die folgenden Schritte umfasst:
Empfangen der Netzwerk-Handover-Anforderung bei einem drahtlosen Router, der das drahtlose lokale Kommunikations-Netzwerk des Teilnehmers unterstützt,
und
Verarbeiten der Netzwerk-Handover-Anforderung zum Ermitteln der User-Identität, die mit der mobilen Kommunikationsvorrichtung, welche die Netzwerk-Handover-Anforderung erzeugte, verknüpft ist.

7. Verfahren wie in einem der Ansprüche 3, 4, 5 oder 6 beansprucht, bei dem die mobile Kommunikationsvorrichtung ferner eine Einrichtung zum Anfordern eines Netzwerk-Handovers zwischen heterogenen drahtlosen Kommunikations-Netzwerken (10, 12) des Kommunikationssystems (1) sowohl in aufgelegtem Zustand als auch in besetztem Zustand aufweist, wobei das Verfahren ferner umfasst, dass eine besetzte mobile Kommunikationsvorrichtung ein Netzwerk-Handover anfordert.

8. Verfahren wie in einem der Ansprüche 3, 4, 5, 6 oder 7 beansprucht, bei dem die Art des für den Teilnehmer individualisierten Hinweises auf ein Netzwerk-Handover durch den Teilnehmer zu einer für den Teilnehmer individualisierten Form selektiv kontrolliert wird und in der gleichen für den Teilnehmer individualisierten Art für irgendeine mobile Kommunikationsvorrichtung bereitgestellt wird, die sich in dem Bereich befindet, der durch das drahtlose lokale Kommunikations-Netzwerk des Teilnehmers bedient wird.

9. Verfahren wie in einem der Ansprüche 3, 4, 5, 6 oder 7 beansprucht, bei dem die Art des für den Teilnehmer individualisierten Hinweises auf ein Netzwerk-Handover durch den Teilnehmer für eine bestimmte User-Identität oder Gruppe von User-Identitäten festgelegt wird.

10. Verfahren wie in einem der Ansprüche 3, 4, 5, 6, 7, 8 oder 9 beansprucht, bei dem die Art des für den Teilnehmer individualisierten Hinweises auf ein Netzwerk-Handover anzeigt, dass es der Teilnehmer der mobilen Kommunikationsvorrichtung des anderen Users ermöglicht hat, auf einen Dienst oder mehrere Dienste des drahtlosen lokalen Netzwerks des Teilnehmers zuzugreifen.

11. Verfahren wie in einem der Ansprüche 3, 4, 5, 6, 7, 8, 9 oder 10 beansprucht, bei dem der für den Teilnehmer individualisierte Hinweis auf ein Netzwerk-Handover eine Angabe der Teilnehmer-Identität des ersten Teilnehmers enthält, für den oder von dem die mobile Kommunikationsvorrichtung Handover angefordert hat.

12. Verfahren wie in einem der Ansprüche 3 bis 11 beansprucht, bei dem das für den Teilnehmer individualisierte Netzwerk-Handover eine Medien-Datei umfasst, wobei die Medien-Datei, wenn die mobile Kommunikationsvorrichtung eine Anforderung für ein Netzwerk-Handover von oder zu einem drahtlosen lokalen Kommunikations-Netzwerk, das mit der Teilnehmer-Identität verknüpft ist, erzeugt, bei der mobilen Kommunikationsvorrichtung ausgeführt wird.

13. Verfahren wie in Anspruch 12 beansprucht, bei dem die ausgeführte Medien-Datei mindestens eine Art der folgenden Medien umfasst:
ein Bild oder mehrere Bilder zur Anzeige auf der mobilen Kommunikationsvorrichtung,
eine Audio-Datei oder mehrere Audio-Dateien zum Abspielen auf der mobilen Kommunikationsvorrichtung,
eine Video-Datei oder mehrere Video-Dateien zum Abspielen auf der mobilen Kommunikationsvorrichtung
und/oder
eine physikalische Antwort in der mobilen Kommunikationsvorrichtung.

14. Verfahren wie in einem der Ansprüche 3 bis 13 beansprucht, bei dem ein unterschiedlicher für den Teilnehmer individualisierter Hinweis auf ein Netzwerk-Handover an die mobile Kommunikationsvorrichtung geliefert wird, wenn die mobile Kommunikationsvorrichtung ein Handover von dem drahtlosen Weitverkehrs-Kommunikations-Netzwerk zu dem drahtlosen lokalen Kommunikations-Netzwerk durchführt, als wenn die mobile Kommunikationsvorrichtung ein Handover von dem drahtlosen lokalen Kommunikations-Netzwerk zu dem drahtlosen Weitverkehrs-Kommunikations-Netzwerk durchführt.

## Revendications

1. Système de communication comprenant :
une pluralité de réseaux locaux de communication sans fil ; et
un réseau étendu de communication sans fil ;
un moyen pour envoyer et recevoir des communications vers des dispositifs de communication mobile aptes à fonctionner dans un premier mode au sein d'une pluralité de réseaux locaux de communication sans fil, aptes à fonctionner dans un second mode au sein dudit réseau étendu de communication sans fil, et aptes à mettre en oeuvre un transfert entre des réseaux entre au moins l'un desdits réseaux locaux de communication sans fil et ledit réseau étendu de communication sans fil ;
le système de communication comprenant un moyen de transfert entre des réseaux pour traiter une demande de transfert entre des réseaux reçue à partir d'un tel dispositif de communication mobile lorsque ledit dispositif de communication mobile cherche à mettre en oeuvre un dit transfert entre des réseaux dans l'une ou l'autre des directions entre ledit réseau étendu de communication sans fil et ledit au moins l'un desdits réseaux locaux de communication sans fil ;
le moyen de transfert entre des réseaux comprenant un moyen pour identifier un réseau local de communication sans fil associé à ladite demande de transfert entre des réseaux ;
un moyen pour déterminer une identité d'un utilisateur du dispositif de communication mobile effectuant la demande de transfert entre des réseaux ;
un moyen pour communiquer ladite identité à un routeur pour ledit réseau local de communication sans fil associé à ladite demande de transfert entre des réseaux ; dans lequel
le système de communication est agencé de manière à permettre à un premier abonné associé audit réseau local de communication sans fil de stocker, à un emplacement accessible audit routeur, pour chaque dispositif d'une pluralité de dispositifs de communication mobile, une alerte de transfert entre des réseaux personnalisée par l'abonné devant être annoncée sur le dispositif de communication mobile associé à ladite identité d'utilisateur au moment d'entrer dans et/ou de quitter une zone couverte par ledit réseau local sans fil, dans lequel
la forme de ladite alerte de transfert entre des réseaux personnalisée par l'abonné est sélectivement déterminée par ledit premier abonné ; et
un moyen pour déterminer, lorsqu'un transfert entre des réseaux est demandé, si ladite alerte de transfert entre des réseaux personnalisée par l'abonné a été configurée sur ledit routeur en vue d'une communication audit dispositif de communication mobile, et le cas échéant, pour communiquer ladite alerte audit dispositif de communication mobile.

2. Système de communication selon la revendication 1, dans lequel
un dit dispositif de communication mobile est associé à une identité d'utilisateur et est apte à fonctionner dans deux modes de communication, un mode étant associé à un dit réseau local de communication sans fil, l'autre mode étant associé à un dit réseau étendu de communication sans fil, le dispositif de communication mobile comprenant :
un moyen pour déterminer la présence d'un autre réseau de communication sans fil dans lequel ledit dispositif de communication mobile fonctionne en utilisant un mode desdits deux modes de communication différent d'un mode en cours desdits deux modes de fonctionnement du dispositif de communication mobile dans un dit réseau de communication sans fil au sein dudit système de communication ;
un moyen pour déterminer si un ou plusieurs critères pour demander un dit transfert entre des réseaux à un autre dit réseau de communication sans fil sont remplis ;
un moyen pour demander un transfert entre des réseaux audit autre réseau de communication sans fil, ledit transfert entre des réseaux demandé étant destiné à mettre en oeuvre un transfert entre des réseaux hétérogène vers ou depuis ledit réseau local de communication sans fil associé audit abonné, ledit abonné présentant une identité d'abonné associée à un utilisateur distinct d'un utilisateur présentant l'identité d'utilisateur associée audit dispositif de communication mobile ; et
un moyen pour générer ladite alerte de transfert entre des réseaux personnalisée par l'abonné sur ledit dispositif de communication mobile conjointement avec un événement de transfert entre des réseaux hétérogène dudit transfert entre des réseaux demandé dudit dispositif de communication mobile.

3. Procédé de fourniture d'une alerte de transfert entre des réseaux personnalisée à un dispositif de communication mobile (20) dans un système de communication (1), le système de communication comprenant une pluralité de réseaux locaux de communication sans fil (12) et un réseau étendu de communication sans fil (10), ledit dispositif de communication mobile (20) étant associé à une identité d'utilisateur respective et étant apte à fonctionner dans deux modes de communication, un premier mode étant associé à un réseau local de communication sans fil (12) dudit système de communication (1), et un second mode étant associé au réseau étendu de communication sans fil (10) dudit système de communication, et étant également apte à mettre en oeuvre un transfert entre des réseaux entre au moins l'un desdits réseaux locaux de communication sans fil et ledit réseau étendu de communication sans fil, le procédé comprenant les étapes ci-dessous consistant à :
traiter des demandes de transfert entre des réseaux reçues à partir d'un dispositif de communication mobile lorsque ledit dispositif de communication mobile cherche à mettre en oeuvre un transfert entre des réseaux entre ledit réseau étendu de communication sans fil et l'un d'une pluralité de réseaux locaux de communication sans fil en déterminant, pour un dispositif de communication mobile fonctionnant dans l'un des réseaux, la présence d'un autre réseau de communication sans fil dans lequel ledit dispositif de communication mobile est exploitable en utilisant l'un des modes de communication différents d'un mode de fonctionnement en cours dudit dispositif de communication mobile dans ledit système de communication ;
déterminer si un ou plusieurs critères pour demander un transfert entre des réseaux audit autre réseau de communication sans fil sont remplis ;
générer une demande de transfert entre des réseaux pour mettre en oeuvre un transfert entre des réseaux audit autre réseau de communication sans fil lorsque ledit un ou lesdits plusieurs critères pour demander un transfert entre des réseaux audit autre réseau de communication sans fil sont remplis, ledit transfert entre des réseaux demandé étant un transfert vers ou depuis ledit réseau local sans fil ;
stocker, à un emplacement accessible à un routeur associé aux réseaux locaux de communication sans fil associés à un premier abonné associé à une première identité d'utilisateur, une alerte de transfert entre des réseaux personnalisée pour une identité d'utilisateur spécifique ou un groupe d'identités d'utilisateurs, la forme de l'alerte étant générée par le premier abonné ;
identifier l'un des réseaux locaux de communication sans fil associés à ladite demande de transfert entre des réseaux comme étant ledit réseau local de communication sans fil ;
communiquer l'identité d'utilisateur associée au dispositif d'utilisateur à un routeur associé audit réseau local ;
déterminer si ladite alerte de transfert entre des réseaux personnalisée par l'abonné, associée à l'identité d'utilisateur, a été configurée sur ledit routeur par ledit premier abonné, et le cas échéant, communiquer ladite alerte audit dispositif de communication mobile ; et
générer ladite alerte de transfert entre des réseaux personnalisée par l'abonné sur ledit dispositif de communication mobile conjointement avec l'événement de transfert entre des réseaux.

4. Procédé selon la revendication 3, dans lequel ledit événement de transfert entre des réseaux comprend la génération de ladite demande de transfert entre des réseaux.

5. Procédé selon la revendication 3, dans lequel ledit événement de transfert, entre des réseaux comprend l'achèvement d'un transfert entre des réseaux vers ou depuis ledit réseau local de communication sans fil dudit abonné.

6. Procédé selon l'une quelconque des revendications 3, 4, ou 5, comprenant en outre les étapes ci-dessous consistant à :
recevoir ladite demande de transfert entre des réseaux au niveau d'un routeur sans fil prenant en charge ledit réseau local de communication sans fil dudit abonné ; et
traiter ladite demande de transfert entre des réseaux en vue de déterminer ladite identité d'utilisateur associée au dispositif de communication mobile ayant généré ladite demande de transfert entre des réseaux.

7. Procédé selon l'une quelconque des revendications 3, 4, 5, ou 6, dans lequel ledit dispositif de communication mobile comprend en outre un moyen pour demander un transfert entre des réseaux entre des réseaux de communication sans fil hétérogènes (10, 12) dudit système de communication (1), à la fois à l'état raccroché et décroché, dans lequel ledit procédé comprend en outre l'étape dans laquelle un dit dispositif de communication mobile à l'état raccroché demande un transfert entre des réseaux.

8. Procédé selon l'une quelconque des revendications 3, 4, 5, 6, ou 7, dans lequel la forme de l'alerte de transfert entre des réseaux personnalisée par l'abonné est commandée sélectivement par l'abonné en une forme personnalisée par l'abonné, et est fournie dans la même forme personnalisée par l'abonné à un quelconque dispositif de communication mobile qui se situe dans la zone desservie par ledit réseau local sans fil de l'abonné.

9. Procédé selon l'une quelconque des revendications 3, 4, 5, 6 ou 7, dans lequel la forme de l'alerte de transfert entre des réseaux personnalisée par l'abonné est déterminée par l'abonné pour une identité d'utilisateur spécifique ou un groupe d'identités d'utilisateurs.

10. Procédé selon l'une quelconque des revendications 3, 4, 5, 6, 7, 8 ou 9, dans lequel la forme de l'alerte de transfert entre des réseaux personnalisée par l'abonné indique que l'abonné a activé ledit dispositif de communication mobile dudit un autre utilisateur en vue d'accéder à un ou plusieurs services du réseau local sans fil de l'abonné.

11. Procédé selon l'une quelconque des revendications 3, 4, 5, 6, 7, 8, 9, ou 10, dans lequel l'alerte de transfert entre des réseaux personnalisée par l'abonné comprend une indication de l'identité d'abonné du premier abonné vers ou à partir duquel ledit dispositif de communication mobile a demandé un transfert entre des réseaux.

12. Procédé selon l'une quelconque des revendications 3 à 11, dans lequel ledit transfert entre des réseaux personnalisé par l'abonné comprend un fichier multimédia, dans lequel lorsque ledit dispositif de communication mobile génère une dite demande pour un transfert entre des réseaux depuis ou vers ledit réseau local de communication sans fil associé à ladite identité d'abonné, ledit fichier multimédia est exécuté sur ledit dispositif de communication mobile.

13. Procédé selon la revendication 12, dans lequel
ledit fichier multimédia exécuté comprend au moins une forme des contenus multimédias ci-dessous :
une ou plusieurs images à afficher sur le dispositif de communication mobile;
un ou plusieurs fichiers audio à lire sur le dispositif de communication mobile ;
un ou plusieurs fichiers vidéo à lire sur le dispositif de communication mobile ; et/ou
une réponse physique dans le dispositif de communication mobile.

14. Procédé selon l'une quelconque des revendications 3 à 13, dans lequel une alerte de transfert entre des réseaux personnalisée par l'abonné différente est fournie audit dispositif de communication mobile lorsque ledit dispositif de communication mobile met en oeuvre un transfert entre des réseaux vers ledit réseau local de communication sans fil à partir dudit réseau étendu de communication sans fil, par rapport à celle qui est fournie lorsque ledit dispositif de communication mobile met en oeuvre un transfert entre des réseaux dudit réseau local de communication sans fil audit réseau étendu de communication sans fil.
